# EUROPÄISCHE PATENTANMELDUNG

(11) **EP 0 577 965 A1**
(43) Veröffentlichungstag der Anmeldung: **12.01.1994**
(21) Anmeldenummer: 93108728.2
(22) Anmeldetag: 29.05.1993
(51) Int. Cl.: G01N 29/26, G01N 29/22

(54) **Verfahren zur Längs-, Quer- und Schrägfehlerprüfung mittels Ultraschall von Werkstücken nach dem Impuls-Echo-Verfahren**

(30) Priorität: 23.06.1992 DE 4220444
(71) Anmelder: KRAUTKRÄMER GmbH & Co., D-50354 Hürth (DE)
(72) Erfinder: Karbach, Bernhard, W-5042 Erftstadt-Friesheim (DE); Patzke, Ottokar, W-5042 Erftstadt-Liblar (DE)
(74) Vertreter: Bauer, Wulf, Dr.

(57) **Zusammenfassung**

Bei dem Verfahren zur Längs-, Quer- und Schrägfehlerprüfung mittels Ultraschall von Werkstücken wird ein Prüfkopfträger (26), der minde stens einen Prüfkopf (32 bis 36) aufweist, translatorisch über eine Oberfläche des Werkstücks (44, 64) hinwegbewegt. In rascher Folge werden Ultraschallimpulse erzeugt, die von jedem Prüfkopf (32 bis 36) entlang jeweils eines Schallstrahls in Prüfbereichen auf die Oberfläche des Werkstücks (44, 64) treffen, wobei alle diese Prüfbereiche auf einer linienhaften Prüfspur liegen, so daß bei unterbrochener translatorischer Bewegung alle Prüfbereiche in ein- und demselben Prüfbereich zusammenfallen und wobei die Schallstrah len in einem vorgegebenen, konstanten Winkel zu einer auf jedem Prüfbereich errichteten Normalen (38) verlaufen. Die Schallstrahlen laufen auf einem Kegelmantel um die jeweilige Normale (38) um. Ein vollständiger Umlauf von 360° erfolgt in einer Zeitspanne, die kürzer ist als die Zeitspanne, die die transla torische Bewegung benötigt, um eine Strecke mit den Abmessungen eines Prüfbereichs zu überqueren. Pro Umlauf werden mindestens zehn Ultraschallimpulse erzeugt und in die Oberfläche des Werkstücks (44, 64) eingeschallt.

## Beschreibung

Die Erfindung betrifft ein Verfahren zur Längs-, Quer- und Schrägfehlerprüfung mittels Ultraschall von Werkstücken, bei dem ein Prüfkopfträger, der mindestens einen Prüfkopf aufweist, translatorisch über eine Oberfläche des Werkstücks hinwegbewegt wird und in rascher Folge Ultraschallimpulse erzeugt werden, die von jedem Prüfkopf entlang jeweils eines Schallstrahls in Prüfbereichen auf die Oberfläche des Werkstücks treffen, wobei alle diese Prüfbereiche auf einer linienhaften Prüfspur liegen, so dar bei unterbrochener translatorischer Bewegung alle Prüfbereiche in ein- und demselben Prüfbereich zusammenfallen und wobei die Schallstrahlen in einem vorgegebenen, konstanten Winkel zu einer auf jedem Prüfbereich errichteten Normalen verlaufen. Insbesondere ergibt sich der Vorteil sämtliche Schrägfehlerlagen zwischen Längs- und Querlage in einem Prüfzyklus aufzufinden.

Aus der DE-40 36 005 A1 ist ein Verfahren dieser Art bekannt, bei dem die zu prüfenden Werkstücke rotationssymmetrisch sind, also insbesondere als Rohre und Stangen vorliegen. Nach diesem vorbekannten Verfahren können gezielt Schrägfehler im Werkstück erfaßt werden, die innerhalb eines vorgegebenen Winkelbereichs liegen. Jeder Prüfkopfträger hat zwei Prüfköpfe, die ein Paar bilden und auf einen gemeinsamen Prüfbereich auf der Oberfläche des Werkstücks ausgerichtet sind. Die Schallstrahlen dieser beiden Prüfköpfe liegen symmetrisch zu einer jeweiligen Normalen, die auf dem Prüfbereich errichtet ist. Ein Prüfkopf des Paars erfaßt Schrägfehler in einem Pluswinkelbereich, während der andere Prüfkopf die Schrägfehler im zahlenmäßig gleichen, jedoch negativen Winkelbereich erfaßt.

Der vorbekannte Prüfkopfträger ist dreheinstellbar, dadurch können Schrägfehler einer gewünschten Orientierung erfaßt werden.

Aus der EP 131 371 A1 ist eine Ultraschallprüfvorrichtung bekannt, bei der über einen Motor ein Prüfkopfträger gedreht wird, in dem ein Prüfkopf schräg zur Drehachse angeordnet ist.

Mit den vorbekannten Vorrichtungen und den bei deren Einsatz ablaufenden Verfahren ist es nicht möglich, ein Werkstück daraufhin zu überprüfen, ob es frei von Schrägfehlern jeglicher Art ist. Nun sind derartige Prüfungen zwar derzeit von den Normen nicht vorgeschrieben und werden daher nicht durchgeführt, es wird aber zunehmend wichtiger, ausgewählte Musterstücke und möglicherweise auch ganze Produktionsreihen daraufhin zu untersuchen, ob auch keine Schrägfehler irgendwelcher Winkellage vorhanden sind.

Hier setzt nun die Erfindung ein. Sie hat es sich zum Ziel gemacht, das bekannte Verfahren der eingangs genannten Art dahingehend weiterzuentwickeln, daß Winkelfehler in beliebiger Winkellage erfaßbar sind.

Diese Aufgabe wird ausgehend von den Verfahrensmerkmalen der eingangs genannten Art gelöst durch ein Verfahren mit den Merkmalen des Patentanspruchs 1.

Erfindungsgemäß wird in jedem einzelnen Prüfungsbereich auf Winkelfehler unterschiedlicher Lage geprüft, hierzu werden, in einem stets konstanten Winkel zur jeweiligen Normalen auf den Prüfbereich, mindestens zehn Messungen unter unterschiedlichen Einschallwinkeln durchgeführt. Die Winkeländerung erfolgt dabei im Vergleich zur translatorischen Bewegung des Prüfkopfträgers über das Werkstück so ausreichend schnell, daß eine Messung aller Winkellagen, also ein Umlauf um 360°, stattgefunden hat, bevor die translatorische Bewegung den Prüfbereich soweit verschoben hat, daß er nicht mehr mit dem Prüfbereich bei Beginn der Winkelmessung zumindest teilweise überlappt. Durch die mindestens zehn Messungen pro Umlauf ist sichergestellt, daß eine Winkelauflösung von mindestens 36° erhalten wird, dies ist für ein Auffinden von Schrägfehlern unterschiedlichster Orientierungen ausreichend.

Das erfindungsgemäße Verfahren hat den Vorteil, daß in einem Prüfzyklus sämtliche Schrägfehlerlagen zwischen Längs-, Quer- und Schräglage aufgefunden werden können. Die Worte Schrägfehler oder Winkelfehler werden im folgenden für alle Fehlerlagen in Längs-, Quer- und Schrägrichtung, also im Sinne eines Oberbegriffs, benutzt.

Unter Prüfbereich wird der Fleck verstanden, für den bei einer einzelnen Impuls-Echo-Messung eine Aussage gemacht werden kann. Der Prüfbereich, auch Prüffleck genannt, wird beispielsweise definiert durch einen -6 dB (oder -10 dB) Abfall der Nachweisempfindlichkeit ausgehend vom zentralen Schallstrahl. Der Prüfbereich ist typischerweise ein kreisförmiger Fleck, dessen Durchmesser zumeist zwischen 2 und 4 mm liegt. die tatsächlichen Werte sind abhängig von der Art des verwendeten Prüfkopfs, der Fokussierung, dem Abstand des Prüfkopfs von der Oberfläche u.s.w.. Die genannten Werte sollen lediglich einen Anhaltspunkt geben.

Als vorteilhaft hat es sich bei der Durchführung des Verfahrens erwiesen, möglichst wenige Prüfköpfe einzusetzen, weil hierdurch der apparative Aufwand und damit die Gesamtkosten einer Anlage verringert werden. Hierzu rotiert der mindestens eine Prüfkopf samt seinem Prüfkopfträger um eine Achse, die parallel zu den Normalen auf den Prüfbereichen verläuft. Der Prüfkopf selbst ist schräg gestellt und strahlt in einem Winkel von normalerweise 19° in die Oberfläche des Werkstücks ein.

Demgegenüber ist der mechanische und elektronische Aufwand geringer und kann die Prüfgeschwindigkeit erhöht werden, wenn mehr als ein Prüfkopf eingesetzt wird, beispielsweise zwei, drei oder mehrere, auf gleichen Teilungswinkeln angeordnete Prüfköpfe. Als besonders vorteilhaft hat es sich erwiesen, eine ringförmige Anordnung von Prüfköpfen vorzusehen, die einzeln nacheinander angesteuert werden. In diesem Fall ist die mechanische Relativbewegung erheblich vereinfacht.

Schließlich hat es sich als vorteilhaft herausgestellt, Reflektoren, Refraktoren oder Schalleiter zwischen einem nicht gedrehten Prüfkopf und der Werkstückoberfläche vorzusehen, die so angeordnet sind, daß die einzelnen Schallsignale umlaufend aus verschiedenen Richtungen in das Werkstück eingeschallt und ihre Echos erfaßt werden.

Angewendet werden kann das Verfahren insbesondere bei Prüfvorrichtungen für Rundmaterial, also Rohre und Stangen, sowie plattenförmiges Material, also insbesondere Bleche. Im ersteren Fall kann die translatorische Bewegung auf einer Schraubenlinie durch Drehung des Rohrs oder der Stange um seine Längsachse und Längsvorschub oder durch einen Rotor und Längsvorschub des rotationssymmetrischen Prüfstücks erhalten werden, verwiesen wird hierzu auf die bereits eingangs genannte DE 40 36 005 A1. Bei einem Rotor kann der Rotorantrieb durch geeignete Übersetzung und Kuppelung gleichzeitig für den Drehantrieb eines Prüfkopfträgers verwendet werden.

Bei ringförmigen Arrays hat es sich als vorteilhaft erwiesen, einen planebenen Schwingerring auf einen Dämpfungskörperring aufzukleben und ihn anschließend in Einzelschwinger unter vorgegebenen Teilungswinkeln aufzuschneiden. Der Einschallwinkel von üblicherweise 19° wird durch einen vorgeklebten Linsenring erhalten.

Mit einer derartigen Anordnung oder mit mindestens zwei Einzelprüfköpfen ist auch eine Durchschallung unter beliebigen Winkelausrichtungen möglich.

Weitere Vorteile und Merkmale der Erfindung ergeben sich aus den übrigen Ansprüchen sowie der nun folgenden Beschreibung von nicht einschränkend zu verstehenden Ausführungen, an denen das erfindungsgemäße Verfahren näher erläutert wird. In der Zeichnung zeigen:
- Fig. 1: eine schnittbildliche Darstellung durch den Teilbereich eines Rotors einer Rotationsprüfmaschine für Rohre mit Darstellung eines geprüften Teilabschnittes eines Rohres, die Schnittebene verläuft durch die Längsachse des Rohres,
- Fig. 2: eine schnittbildliche Darstellung einer Rohrprüfmaschine mit einem ringförmigen Array von Prüfköpfen, die Schnittebene ver läuft auf einer Durchmesserebene des Rohrs,
- Fig. 3: eine Prinzipdarstellung in Seitenansicht einer Vorrichtung zur Durchführung des erfindungsgemäßen Verfahrens in einer Anwen dung für eine Blechprüfung, die Vorrichtung arbeitet nach dem Prinzip der Schallbrechung,
- Fig. 4: eine Prinzipdarstellung in Seitenansicht einer Vorrichtung zur Durchführung des erfindungsgemäßen Verfahrens in einer Anwen dung für eine Blechprüfung, die Vorrichtung arbeitet nach dem Prinzip der Schallreflektion und
- Fig. 5: eine Prinzipdarstellung in Seitenansicht einer Vorrichtung zur Durchführung des erfindungsgemäßen Verfahrens in einer Anwen dung für eine Blechprüfung, die Vorrichtung arbeitet nach dem Prinzip der Schalleitung in einem Rohr.

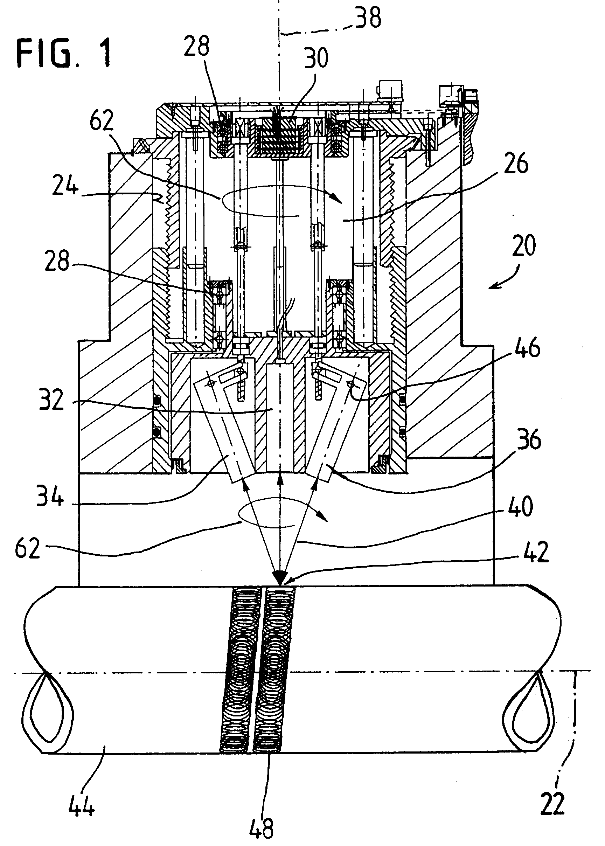

In Fig. 1 ist ein Teilbereich eines Rotors 20 einer Rohrprüfmaschine gezeigt, der Rotor rotiert um eine Rotationsachse 22 und hat eine radiale Bohrung 24, in die ein Prüfeinschub eingesetzt ist. Dieser besteht aus einem gegenüber der Bohrung 24 stationären, äußeren Teil und einem inneren Prüfkopfträger 26. Der äußere Teil ist ansich bekannt, auf ihn muß hier nicht näher eingegangen werden, er kann sowohl dreheingestellt als auch in der radialen Bohrung 24 längseingestellt werden. Mit dem Prüfkopfträger 26 ist er über zwei Sätze Kugellager 28 verbunden, weiterhin trägt er den Stator eines Schleifringsystems 30, das der Übertragung der elektrischen Signale dient.

Der Prüfkopfträger 26 ist im wesentlichen rotationssymmetrisch aufgebaut. An seinem unteren, freien Ende sind insgesamt drei Prüfköpfe 32, 34, 36, auch Ultraschallwandler genannt, frei zugänglich. Der Prüfkopf 32 ist ein mittiger Prüfkopf, der auf der Achse 38 der radialen Bohrung 24, die auch die Rotationsachse des Prüfkopfträgers 26 ist, angeordnet ist. Die beiden anderen Prüfköpfe 34, 36 sind V-förmig zueinander gestellt. Die Anordnung ist so getroffen, daß sich alle Zentralstrahlen 40 der drei Prüfköpfe 32 bis 36 in einem einzigen Punkt 42 treffen. Dieser Punkt 42 befindet sich auf der Oberfläche eines zu prüfenden Rohres 44, dessen Rohrachse mit der Rotationsachse 22 zusammenfällt. Es wird in einer Richtung dieser Rotationsachse 22 längsbewegt. Zusammen mit der Rotationsbewegung des Rotors 22 um die Rotationsachse 22 führt dies zu einer schraubenlinienförmigen Abtastbahn für die Ultraschallmessung auf dem Außenmantel des Rohres 44. Anders ausgedrückt wandert der Punkt 42 während der Prüfung entlang einer Schraubenlinie über den Rohraußenmantel.

Der Neigungswinkel, in dem die beiden seitlichen Prüfköpfe 34, 36 zur Achse 38 stehen, ist einstellbar. Hierfür ist im Prüfkopfträger 26 jeweils eine von außen dreheinstellbare und feststellbare Spindel vorgesehen, auf der eine Mutter sitzt, die wiederum in einen Längsschlitz greift, der am Prüfkopf 34 bzw. 36 vorgesehen ist. Die Prüfköpfe 34, 36 sind um eine Achse 46 schwenkbar angeordnet.

Jeder Prüfkopf 32 bis 36 bewirkt auf der Oberfläche des zu prüfenden Rohres 44 einen Prüffleck, der im allgemeinen zentrisch um den Punkt 42, in dem der Zentralstral 40 die Oberfläche trifft, angeordnet ist und einen Durchmesser von beispielsweise 3 mm hat. Aufgrund der Drehung des Prüfkopfträgers 26 um die Achse 38 rotiert dieser Prüffleck um die Achse 38. Die drei Prüfflecken 48 der drei Prüfköpfe 32 bis 36 rotieren aufgrund der gemeinsamen mechanischen Anordnung dabei miteinander.

Gleichzeitig werden die Prüfflecken 48 entlang der bereits beschriebenen Schraubenlinienbahn über die Oberfläche des Rohres 44 geführt. Dies ergibt insgesamt eine überlagerte Bewegung, wie sie in Figur 1 durch die ineinander verschlungenen Kreisbahnen, die in engem Abstand nebeneinander angeordnet sind, dargestellt ist.

Diese Kreisbahnen begrenzen den jeweiligen Prüffleck 48. Jede Kreisbahn soll eine vollständige Rotation des Prüfkopfträgers 26 um 360° darstellen. Während dieser vollständigen Rotation finden zumindest zehn Prüfungen statt, werden also von den beiden seitlichen Prüfköpfen 34, 36 insgesamt mindestens zehn Ultraschallimpulse abgegeben und wieder aufgenommen. Bei einer Durchschallung werden also mindestens zehn Impulse ausgesandt und vom anderen Prüfkopf 34 bzw. 36 aufgenommen, bei einer separaten Messung sendet jeder der beiden Prüfköpfe 34 bzw. 36 mindestens insgesamt fünf Ultraschallimpulse pro Umlauf um 360° aus und empfängt deren Echos.

Wie aus Fig. 1 ersichtlich ist, liegen die ineinander verschlungenen Kreis-bahnen so eng beieinander, daß nach einem vollständigen Umlauf der Versatz in Umfangsrichtung des Rohres kleiner ist als der Durchmesser der jeweiligen Kreisbahn. Dies bedeutet, daß eine volle Rotation des Prüfflecks 48 stattfindet, bevor die Translationsbewegung, die hierdurch die Rotation des Rotors 20 um seine Rotationsachse 22 bewirkt wird, den Prüffleck 48 um eine Strecke weiterverschieben konnte, die dem Durchmesser des Prüfflecks 48 entspricht. In der gezeigten Abbildung finden vielmehr etwa fünf vollständige Umläufe um 360° des Prüfkopfträgers 26 statt, bevor die Translationsbewegung zu einer Verschiebung des Prüfflecks um eine Strecke geführt hat, die dem Durchmesser des Prüfflecks 48 entspricht. Dadurch ist sichergestellt, daß in jedem Punkt 42 eine vollständige Erfassung von Fehlern in allen Winkellagen möglich ist, bevor die Prüfung translatorisch weiter verschoben wird.

Betrachtet vom Punkt 42 auf dem Außenmantel des Rohres 44 laufen die Zentralstrahlen 40 und damit auch die diese einhüllenden (konzentrisch umgebenden) Schallstrahlen der seitlichen Prüfköpfe 34, 38 auf einem Kegelmantel um, die Achse dieses Kegelmantels ist eine Normale zur Rohroberfläche, die im Punkt 42 errichtet ist. Sie fällt zusammen mit der Achse 38.

Der Drehantrieb des Prüfkopfträgers 26 erfolgt entweder mit einem separaten Elektromotor oder durch einen stationären Zahnkranz, der den Rotor 20 außen umgreift und von dem über ein zwischengeschaltetes Getriebe ein Drehantrieb des Prüfkopfträgers 26 ausgeht. Die erstgenannte Lösung hat den Vorteil, daß die Drehgeschwindigkeit, mit dem der Prüfkopfträger 26 um seine Achse 38 umläuft, einfacher im Bezug auf die translatorische Bewegung eingestellt werden kann. Weiterhin ist es bei einem separaten Antrieb einfacher möglich, zwischen einer synchronisierten Bewegung der Rotation und der Translation und einer unsynchronisierten Bewegung zu wechseln. Üblicherweise wird in Synchronisierung gearbeitet, so daß bei jedem einzelnen Umlauf des Prüfflecks 48 um 360° die Ultraschallprüfungen jeweils in vorgegebenen Winkeln, beispielsweise ausgehend von 0° (zusammenfallend mit der Rohrlängsachse) bei 36°, 72°, 108° usw., also alle 36° erfolgen. Es kann aber auch jeder zweite Umsatz versetzt, beispielsweise um 18° versetzt, erfolgen, so daß bei der zweiten Prüfung jeweils Zwischenbereiche gemessen werden. Es ist aber auch eine Prüfung ohne jegliche Synchronisierung möglich, die z. B. dann sinnvoll ist, wenn es nicht auf die absolute Lage der Schrägfehler, sondern nur darauf ankommt, Schrägfehler auf jeden Fall zu erfassen.

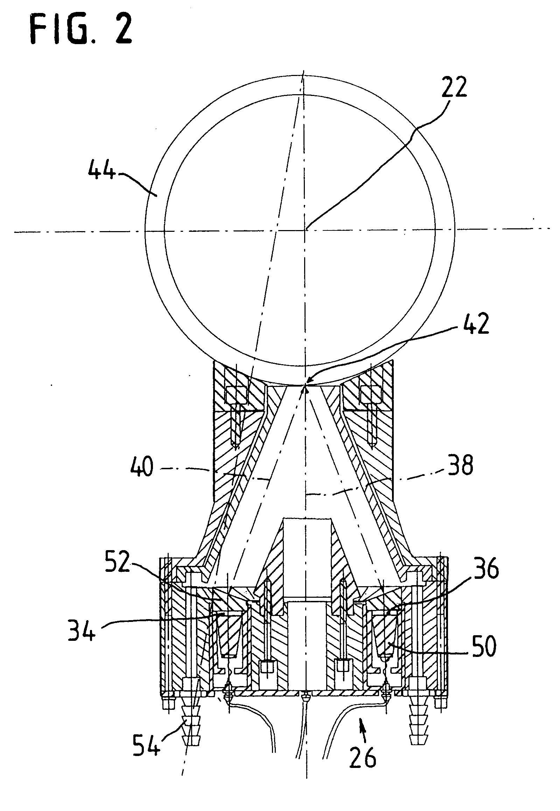

In Fig. 2 ist eine Prüfmaschine mit einer stationären Prüfvorrichtung gezeigt. Ein zu prüfendes Rohr 44 wird schraubenlinienförmig unter der Prüfvorrichtung entlang bewegt. Es ist aber auch möglich, eine Prüfvorrichtung dieser Art in einen Rotor entsprechend der Darstellung in Fig. 1 einzubauen.

Im Unterschied zur Ausführung in Fig. 1 ist nun die Prüfvorrichtung stationär, sie wird also nicht mechanisch um die Achse 38 gedreht. Dies wird dadurch erreicht, daß anstelle von zwei seitlichen Prüfköpfen 34, 36 nunmehr ein Ring von Prüfköpfen 34, 36 verwendet wird, der aus zehn Ringsektoren besteht. Diese sind auf einen rückwärtigen Dämpfungskörper 50, der ebenfalls ringförmig ist, aufgeklebt. An ihrer Vorderseite befinden sich keilförmige Ringe 52, die eine Brechung des Schallstrahls bewirken, wie anhand des Zentralstrahls 40 gezeigt ist. Vorzugsweise ist mindestens ein Ring 52 aus Ringsektoren aufgebaut, die einzeln einstellbar sind. Dadurch können die Zentralstrahlen 40 der zehn Einzelschwinger auf einen einzigen Punkt 42 einjustiert werden.

Beim praktischen Ablauf der Prüfung wird das Rohr 44 längs seiner Achse 22 aus der Papierebene heraus oder in sie hineinbewegt, gleichzeitig wird das Rohr um diese Achse 22 gedreht. Über Wasseranschlüsse 54 wird der im wesentlichen kegelförmige Raum vor den Prüfköpfen 34, 36 mit Wasser gefüllt und dadurch die notwendige Wasserankopplung erreicht, wie sie auch im Ausführungsbeispiel nach Fig. 1 vorliegt. Bei der Ausführung nach Fig. 2 kann in Pfützentechnik gearbeitet werden.

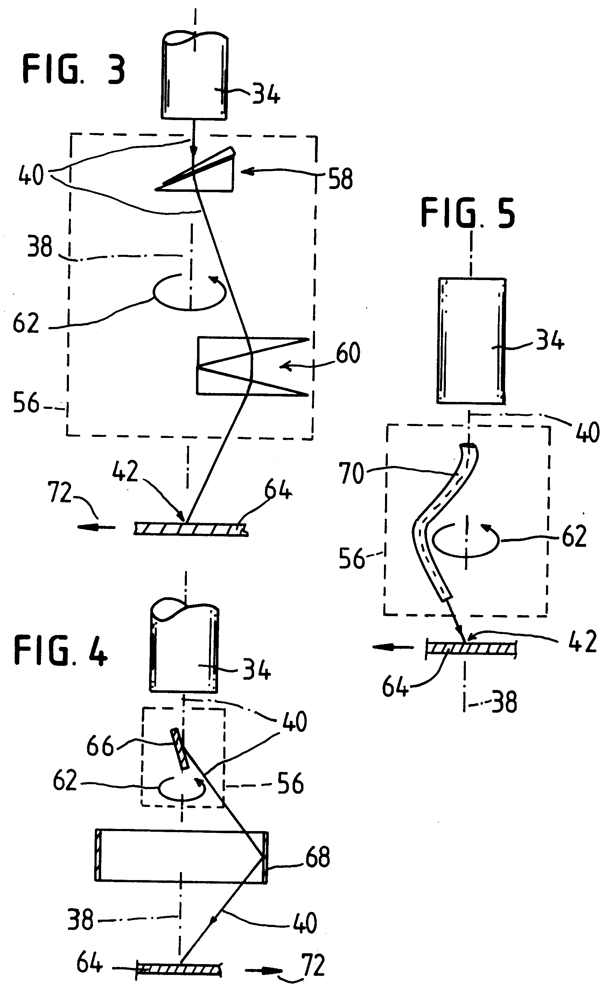

Im Ausführungsbeispiel nach Fig. 3 ist ein Prüfkopf 34 vorgesehen, dessen Zentralstrahl 40 mit der Achse 38 zusammenfällt. Der Prüfkopf 34 ist stationär. Unter ihm befindet sich, über Wasser angekoppelt, ein Behälter 56, in dem zwei keilförmige Prismensysteme 58, 60 angeordnet sind, die sich in Wasser befinden und im Behälter 56 befestigt sind. Gemeinsam mit diesem rotieren sie im Sinne des Drehpfeils 62 um die Achse 38. Das obere Prismensystem 58 bewirkt dabei eine Auslenkung des Zentralstrahls 40 und damit des gesamten, diesem Zentralstrahl 40 umgebenden Schallstrahls aus der Richtung der Achse 38. Durch das untere Prismensystem 60 wird diese Auslenkung wieder rückgängig gemacht, so daß der Zentralstrahl 40 die Achse 38 im Punkt 42 schneidet. Dieser Punkt 42 fällt zusammen mit der Oberfläche eines Werkstücks, das hier als Blech 64 vorliegt.

Durch die Rotation des oberen Prismensystems 58 läuft der Zentralstrahl 40 auf einem Kegelmantel um. Im gezeigten Ausführungsbeispiel wird auch das untere Prismensystem 60 mitgedreht, dies ist aber grundsätzlich nicht notwendig, dieses Prismensystem 60 kann auch durch einen Drehkörper er-setzt werden, der entsteht, wenn man das dargestellte Prismensystem um die Achse 38 dreht. Dann kann das untere Prismensystem 60 stationär bleiben.

Entlang des Schallweges vom Prüfkopf 34 zum Werkstück (Blech 64) ist eine Wasserstrecke ausgebildet, beispielsweise durch Füllen des Behälters 56 und Ankoppeln des Blechs 64 in Pfützentechnik oder über einen Wasserstrahl. Es ist auch möglich, den Behälter mit einem Festkörper, z. B. einem Kunststoff, aufzufüllen.

Im Ausführungsbeispiel nach Fig. 4 gelangt aus ebenfalls einem einzigen Prüfkopf 34 der Zentralstrahl 40 und damit der gesamte Schallstrahl auf die Oberfläche eines oberen Reflektors 66, der sich in einem Behälter 56 befindet und mit diesem im Sinne des Drehpfeils 62 umläuft. Auch in diesem Fall ist der Behälter 56 mit Wasser gefüllt.

Der abgelenkte Zentralstrahl 40, der auf einem Kegelmantel umläuft, gelangt sodann an die Innenfläche eines zylindrischen Reflektors 68 und wird von dort wieder so zurückgebrochen, daß er die Achse 38, die mit dem Zentralstrahl 40 des Prüfkopfs 34 übereinstimmt, schneidet. Der Schnittpunkt ist der Punkt 42, er fällt wiederum mit der Oberfläche eines zu prüfenden Werkstücks, das als Blech 64 vorliegt, zusammen.

Im Ausführungsbeispiel nach Fig. 5 ist ebenfalls ein einziger, stationärer Prüfkopf 34 vorgesehen. Ein Zentralstrahl 40 fällt entlang der Achse 38 auf einen Schalleiter 70, der mit Wasser gefüllt ist. Er ist im gezeigten Ausführungsbeispiel von einem Behälter 56 umgeben, der seinerseits mit Wasser gefüllt sein kann, dies ist aber nicht notwendig.

Der Schalleiter 70 ist durch ein Rohr ausgebildet. Dieses wird im Sinne des Drehpfeils 62 um die Achse 38 gedreht. Der obere Eintrittsbereich des Schalleiters 70 verläuft in Richtung der Achse 38. Von da ab verläuft der Schalleiter 70 nach außen gebogen und verläuft anschließend in einer Rückbiegung wieder so, daß ein unterer Austrittsbereich auf die Achse 38 gerichtet ist. Ein in diesem rohrförmigen Schalleiter 70 geführter Schallstrahl verläßt den Schalleiter 70 im Sinne des Zentralstrahls 40 und trifft in einem Punkt 42, der Schnittpunkt mit der Achse 38 ist, auf die Oberfläche eines Blechs 64.

Anstelle eines rohrförmigen Schalleiters 70 kann auch ein Vollmaterial gewählt werden, beispielsweise mit Rechteckquerschnitt.

Die Ausführungsbeispiele nach den Figuren 3 bis 5 haben den Vorteil, daß der Prüfkopf 34 jeweils nicht gedreht werden muß. Die gedrehten Teile sind nichtelektrische Teile, die Drehbewegung läßt sich über Wasser-strecken an die stationären Teile günstig ankoppeln. Dadurch werden die mechanischen Anforderungen für das Drehen um die Achse 38 und im Sinne des Drehpfeils 62 verringert.

Bei der Prüfung erfolgt die Translationsbewegung des Blechs 64 im Sinne eines Pfeils 72. Anstelle eines Blechs kann auch ein anderes Werkstück, beispielsweise ein Rohr, geprüft werden. So können die Anordnungen nach den Figuren 3 bis 5 in einem Rotor einer Rotationsprüfmaschine angeordnet sein.

## Patentansprüche

1. Verfahren zur Längs-, Quer- und Schrägfehlerprüfung mittels Ultraschall von Werkstücken, bei dem ein Prüfkopfträger (26), der minde stens einen Prüfkopf (32 bis 36) aufweist, translatorisch über eine Oberfläche des Werkstücks (44, 64) hinwegbewegt wird und in rascher Folge Ultraschallimpulse erzeugt werden, die von jedem Prüfkopf (32 bis 36) entlang jeweils eines Schallstrahls in Prüfbereichen auf die Oberfläche des Werkstücks (44, 64) treffen, wobei alle diese Prüfbereiche auf einer linienhaften Prüfspur liegen, so daß bei unterbrochener translatorischer Bewegung alle Prüfbereiche in ein- und demselben Prüfbereich zusammenfallen und wobei die Schallstrah len in einem vorgegebenen, konstanten Winkel zu einer auf jedem Prüfbereich errichteten Normalen (38) verlaufen, wobei a) die Schallstrahlen auf einem Kegelmantel um die jeweilige Normale (38) umlaufen, b) ein vollständiger Umlauf von 360° in einer Zeitspanne tᵣ erfolgt, die kürzer ist als eine Zeitspanne tₜ, die die transla torische Bewegung benötigt, um eine Strecke mit den Abmessungen eines Prüfbereichs zu überqueren, und c) pro Umlauf mindestens zehn Ultraschallimpulse erzeugt und in die Oberfläche des Werkstücks (44, 64) eingeschallt werden.

2. Verfahren nach Anspruch 1, dadurch gekennzeichnet, daß bei dem Umlauf der Schallstrahlen um die jeweilige Normale (38) die Ultraschallimpulse in gleichen Teilungswinkeln erzeugt werden.

3. Verfahren nach Anspruch 1 oder 2, dadurch gekennzeichnet, daß der Prüfkopfträger (26) um die jeweilige Normale (38) gedreht wird.

4. Verfahren nach Anspruch 1 oder 2, dadurch gekennzeichnet, daß der Prüfkopfträger (26) auf einem Ring um die jeweilige Normale (38) angeordnete Prüfköpfe (34, 36) aufweist, vorzugsweise unmittelbar nebeneinander angeordnete Prüfköpfe (34, 36) hat (ringförmiges Array).

5. Verfahren nach Anspruch 1 oder 2, dadurch gekennzeichnet, daß der mindestens eine Prüfkopf (34) nur translatorisch bewegt wird, daß die Ultraschallimpulse über Reflektoren (66, 68) in die Oberfläche des Werkstücks (46, 64) eingeschallt und die Echos über diese Reflektoren (66, 68) empfangen werden, und daß mindestens ein Reflektor im Sinne eines Drehpfeils 62 um die Achse 38 gedreht wird.

6. Verfahren nach Anspruch 1 oder 2, dadurch gekennzeichnet, daß der mindestens eine Prüfkopf (34) nur translatorisch bewegt wird, daß die Ultraschallimpulse dieses Prüfkopfs (34) über Refraktoren (Prismensysteme 58, 60) in die Oberfläche des Werkstücks (46, 64) eingeschallt und die Echos über diese Refraktoren empfangen werden und daß mindestens ein Refraktor (Prismensystem 58) um die Achse (38) im Sinne des Drehpfeils (62) gedreht wird.

7. Verfahren nach Anspruch 1 oder 2, dadurch gekennzeichnet, daß der mindestens eine Prüfkopf (34) nur translatorisch bewegt wird, daß sich zwischen dem Prüfkopf (34) und dem Werkstück (46, 64) ein Schalleiter (70) befindet, der um die Achse (38) im Sinne des Dreh pfeils (62) umläuft und daß dieser Schalleiter (70) einen auf der Achse (38) verlaufenden Eintrittsbereich und einen schräg zu dieser Achse (38) verlaufenden Austrittsbereich hat.
